(19) Europäisches Patentamt
European Patent Office
Office européen des brevets

(11) Veröffentlichungsnummer: **0 075 230**
**B1**

(12) **EUROPÄISCHE PATENTSCHRIFT**

(45) Veröffentlichungstag der Patentschrift: **06.06.84**

(51) Int. Cl.³: **C 09 J 3/14,** C 08 F 220/00

(21) Anmeldenummer: **82108410.0**

(22) Anmeldetag: **11.09.82**

# (54) Anaerob härtende Klebstoffmasse.

(30) Priorität: **17.09.81 DE 3137306**

(43) Veröffentlichungstag der Anmeldung: **30.03.83 Patentblatt 83/13**

(45) Bekanntmachung des Hinweises auf die Patenterteilung: **06.06.84 Patentblatt 84/23**

(84) Benannte Vertragsstaaten: **AT BE CH DE FR GB IT LI NL SE**

(56) Entgegenhaltungen: **Keine Entgegenhaltungen.**

(73) Patentinhaber: **Teroson GmbH, Hans-Bunte-Strasse 4, D-6900 Heidelberg 1 (DE)**

(72) Erfinder: **Reich, Karl, Dr., Finkenhof 55, D-6719 Carlsberg (DE)**

(74) Vertreter: **UEXKÜLL & STOLBERG Patentanwälte, Beselerstrasse 4, D-2000 Hamburg 52 (DE)**

EP 0 075 230 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Es ist bekannt, Acryl- oder Methacrylestern enthaltenden anaerob härtenden Klebstoffen zur Verhinderung einer vorzeitigen Polymerisation während der Lagerung Stabilisatoren zuzusetzen, die ihnen eine ausreichende Lagerstabilität verleihen. Normalerweise bereitet die Stabilisierung radikalisch polymerisierbarer Monomerer bei Raumtemperatur keine besonderen Schwierigkeiten. Erhebliche Probleme treten jedoch dann auf, wenn die Monomeren bereits ein Beschleunigersystem aus einem peroxidischen Initiator und einem Amin enthalten, wie dies bei anaerob härtenden Klebstoffen der Fall ist. Die Schwierigkeit besteht insbesondere darin, daß in den meisten Fällen wirksame Stabilisatoren einen nachteiligen Effekt auf die Abbindegeschwindigkeit solcher Klebstoffmischungen aufweisen.

Für die Stabilisierung von anaerob härtenden Klebstoffen wurde eine große Zahl unterschiedlicher Substanzen vorgeschlagen, welche sich jedoch nach ihrer Wirkung im wesentlichen in drei Gruppen einteilen lassen:

1. Vorstufen für freie Radikale, die imstande sind, mit Makroradikalen einer wachsenden Kette zu reagieren, wobei stabilere freie Radikale gebildet werden, die ein Kettenwachstum und damit eine Polymerisation unterbinden. Zu dieser Gruppe gehören die klassischen Antioxidantien wie Phenole und Hydrochinone, Chinone, Diphenylaminderivate usw. Auch die Nitrone (DE-OS 2 441 963) lassen sich in diese Gruppe einreihen. Der Zusatz von Hydrochinon zu anaerob härtenden Klebstoffmischungen erhöht zwar deren Lagerstabilität, gleichzeitig geht jedoch die Fähigkeit zur Aushärtung auf metallischen Substraten verloren. Sterisch gehinderte Phenole zeigen diesen nachteiligen Effekt nicht im selben Maße, doch ist auch ihre stabilisierende Wirkung begrenzt. Die ebenfalls bekannten N-Nitrosamine und die Hydroxylamine werden zu den Substanzen mit Krebs erregender Wirkung gerechnet, so daß sich ihre Verwendung verbietet.
2. Stabile freie Radikale, die mit Makroradikalen unter Kettenabbruch reagieren können und somit als Inhibitoren wirksam sind. Hierzu gehören beispielsweise die Nitroxyle gemäß der DE-PS 2 060 645. Sie haben den Nachteil, daß es sich um Verbindungen mit definierter Halbwertzeit handelt, die sich während der Lagerung nach und nach zersetzen. Ein weiterer wesentlicher Nachteil dieser Verbindungen besteht darin, daß sie die Aushärtung anaerober Klebstoffe auf Nichteisenmetallen wie beispielsweise Zink verzögern.
3. Verbindungen, die den Metallgehalt der Monomeren durch Verbindungs- oder Komplexbildung herabsetzen, was ebenfalls die Stabilität der Klebstoffmischungen erhöht. Zu diesen Verbindungen gehören insbesondere Chelatbildner wie Derivate der Ethylendiamintetraessigsäure (EDTA), vergl. DE-AS 2 113 094. Diese Stabilisierungsmethode weist den Nachteil auf, daß bei der Anwendung der Klebstoffe auf Metallen erst die Wirkung des Chelatbildners aufgehoben werden muß, um den Vorgang der Aushärtung in Gang zu setzen, was zu verlängerten Abbindezeiten führt.

Bei der Suche nach Stabilisatoren, welche die vorstehend beschriebenen Nachteile nicht aufweisen, wurde überraschend gefunden, daß Sulfamidderivate, insbesondere in Kombination mit sterisch gehinderten Phenolen, ausgezeichnete Stabilisatoren für anaerob härtende Klebstoffe sind, wobei völlig unerwarteterweise auch die Aushärteeigenschaften nicht verschlechtert, sondern sogar verbessert werden.

Wie gefunden wurde, ist die stabilisierende Wirkung der Sulfamidderivate nicht so sehr von der Art der Substituenten abhängig, sondern es ist wesentlich, daß die Verbindungen die Gruppierung

$$-\overset{\overset{\displaystyle O}{\|}}{C}-NH-SO_2-NH-\overset{\overset{\displaystyle O}{\|}}{C}-$$

aufweisen. Verbindungen, die lediglich die Gruppierung

$$-\overset{\overset{\displaystyle O}{\|}}{C}-NH-SO_2-NH_2$$

enthalten, haben nur einen geringen verbessernden Einfluß auf die Stabilität von anaeroben Klebstoffmischungen. Die Entdeckung der stabilisierenden Wirkung der Sulfamide war um so überraschender, als bislang lediglich bekannt war, daß bestimmte andere Schwefel/Stickstoffverbindungen, z. B. Sulfimide, Sulfonsäurehydrazide, Disulfonylamide und Sulfonylhydrazone, in anaerob härtenden Klebstoffmischungen nicht stabilisierend, sondern im Gegenteil beschleunigend wirken (vergl. DE-AS 2 005 043; DE-PS 2 441 918; DE-PS 2 441 920; DE-OS 2 442 001).

Sulfamidderivate, welche die genannten vorteilhaften Eigenschaften als Stabilisatoren in anaerob härtenden Klebstoffen aufweisen, entsprechen vorzugsweise der folgenden allgemeinen Formel:

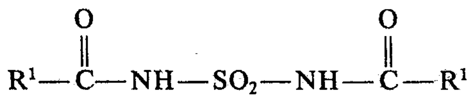

(I)

In dieser Formel können die Reste $R^1$ gleich oder verschieden sein und jeweils ein H-Atom oder einen gerad- oder verzweigtkettigen Alkylrest mit 1 bis 18 C-Atomen, einen Cycloalkylrest mit 3 bis 8 C-Atomen, einen Phenylmethylrest oder einen Alkoxyrest $-OR^2$ bedeuten, wobei $R^2$ ein gerad- oder verzweigtkettiger Alkylrest mit 1 bis 18 C-Atomen, ein Cycloalkylrest mit 3 bis 8 C-Atomen, ein Phenylrest, ein Phenylalkylrest mit 1 bis 4 C-Atomen in der Alkylgruppe oder ein Alkylphenylrest mit 1 bis 4 C-Atomen in der/den Alkylgrupp(en) ist. $R^1$ kann auch einen Trifluor- oder Trichlormethylrest oder einen Alkoxyrest $OR^2$ bedeuten, wobei $R^2$ ein Di- oder Triphenylmethylrest ist.

Die erfindungsgemäß verwendeten Sulfamidderivate der allgemeinen Formel I zeigen schon für sich allein einen günstigen Einfluß auf die Lagerstabilität anaerob härtender Klebstoffe. Die Wirkung nimmt jedoch in erheblichem Maße zu, wenn die Sulfamide in Verbindung mit phenolischen Stabilisatoren (Antioxidantien) eingesetzt werden, wobei das Verhältnis von Sulfamid zu Phenol in einem breiten Bereich schwanken kann, so daß die Kombination der Verbindungen 1 bis 90 Gew.-% des Sulfamidderivats und 99 bis 10 Gew.-% eines phenolischen Antioxidationsmittels enthalten kann. Bevorzugt liegt das Verhältnis von Sulfamid zu phenolischem Antioxidationsmittel zwischen etwa 1 : 1 und 1 : 4; ein besonders günstiges Verhältnis beträgt 1 : 2. Bezogen auf die Klebstoffzusammensetzung finden etwa 0,1 bis 10 Gew.-%, vorzugsweise 0,5 bis 5 Gew.-% und insbesondere 0,8 bis 2 Gew.-%, beispielsweise 1 Gew.-% des Sulfamidderivats Verwendung.

Als Co-Stabilisatoren besonders geeignete Phenole entsprechen der allgemeinen Formel

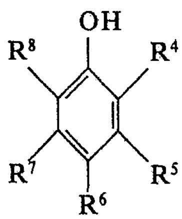

(II)

in der die Reste $R^4$, $R^5$, $R^7$ und $R^8$ jeweils ein H-Atom oder eine Alkylgruppe mit 1 bis 4 C-Atomen darstellen und der Rest $R^6$ entweder dieselbe Bedeutung hat oder eine Hydroxy- oder Methoxygruppe ist.

Bevorzugt werden sterisch gehinderte Phenole, wobei sich das 2,5-Di-tert.-butylhydrochinon besonders bewährt hat.

Die Anaerob härtbaren Klebstoffe sind dem Fachmann seit langem bekannt. Als polymerisierbare Monomere enthalten sie in der Regel Mono-, Di- oder Triacrylatester und/oder -methacrylatester. Geeignete Ester der Acrylsäure bzw. Methacrylsäure sind in der Literatur vielfach beschrieben worden, siehe z. B. US-PS 3 218 305. Durch Verwendung unterschiedlicher mono- oder polyfunktioneller Alkohole oder durch die Umsetzung von hydroxysubstituierten Acrylaten bzw. Methacrylaten mit Isocyanaten oder Carbonsäurederivaten können die polymerisierbaren Monomeren bzw. Oligomeren auf vielfältige Weise variiert werden, was ebenfalls aus der Literatur bekannt ist.

Die anaerob härtbaren Klebstoffmischungen auf Acrylat bzw. Methacrylatbasis enthalten als Härtungsbeschleuniger ein Redoxsystem. Als Radikale bildende Initiatoren haben sich vor allem Hydroperoxide, insbesondere Cumolhydroperoxid bewährt. Als reduktive Komponente sind insbesondere tertiäre aromatische Amine, z. B. N,N-Dimethyl-4-toluidin oder heterocyclische sekundäre Amine mit hydriertem heterocyclischen Ring, z. B. 1,2,3,4-Tetrahydrochinolin, besonders geeignet, vergl. auch hinsichtlich weiterer geeigneter Komponenten des Redoxsystems die US-PS 3 218 305. Darüber hinaus ist es aus der US-PS 3 218 305 bereits bekannt, die Beschleunigung der Aushärtung der Klebstoffmischungen zusätzlich noch durch die Zugabe eines organischen Sulfimids, z. B. von Benzosulfimid, zu verbessern.

In derartigen Klebstoffmischungen zeigen die erfindungsgemäß verwendeten Stabilisatoren die völlig überraschende Eigenschaft, daß sie nicht nur die Lagerstabilität ganz erheblich verbessern, sondern daß sie darüber hinaus auch noch die Aushärtung beschleunigen.

N,N'-Diacylsulfamide sind bereits seit längerer Zeit bekannt. So beschreiben C. H. Anderson und E. F. Degering in Proc. Indiana Acad. Sci. 1946 (56), 134—135 die Herstellung einiger Vertreter dieser Verbindungsklasse durch Acylierung von Sulfamid ohne Lösungsmittel nach folgender Gleichung mit einer Ausbeute von 55% der Theorie:

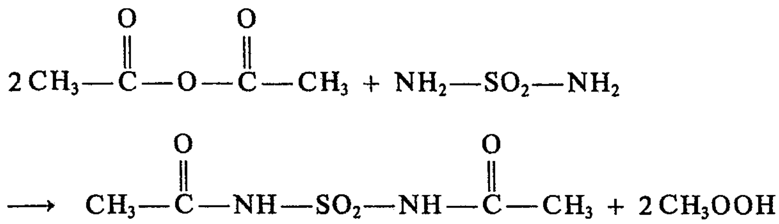

Ein ebenfalls auf der Acylierung von Sulfamid basierendes modifiziertes Verfahren findet sich in der DE-PS 876 846. Die Ausbeute für die Herstellung von N,N'-Diacetylsulfamid wird hier mit 78% der Theorie angegeben.

Da die Herstellung von Sulfamid ein zeitraubendes und umständliches Verfahren ist (s. HOUBEN-WEYL, Methoden der organischen Chemie, Bd. XI/2, 4. Aufl., 1958, S. 713) und außerdem Sulfamid mit nur 44% Ausbeute liefert, war es ein Ziel der vorliegenden Erfindung, ein Verfahren zu suchen, das die gewünschten N,N'-Diacylsulfamide in hoher Ausbeute und Reinheit liefert.

Überraschenderweise wurde gefunden, daß in Sulfuryldiisocyanat $OCN-SO_2-NCO$ beide Isocyanatgruppen mit Carbonsäure in glatter Reaktion N,N'-Diacylsulfamide in hoher Ausbeute liefern:

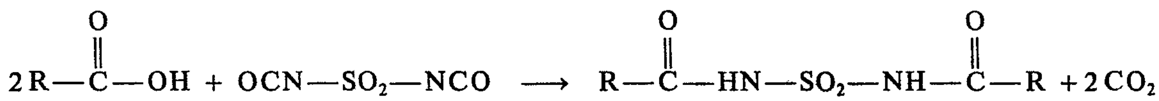

Dabei ist es nur notwendig, die beiden Komponenten in einem Lösungsmittel so lange zu erwärmen, bis die $CO_2$-Entwicklung zum Stillstand kommt, wofür bei 70 bis 80°C im allgemeinen 1 bis 2 h erforderlich sind. Das als Ausgangsmaterial benötigte Sulfuryldiisocyanat ist nach dem Verfahren der DE-PS 940 351 (s. auch HOUBEN-WEYL, Methoden der organischen Chemie, Bd. XI/2, 4. Aufl. 1958, S. 724) zugänglich.

Als Reaktionspartner können besonders vorteilhaft aliphatische Carbonsäuren eingesetzt werden, wobei R ein Wasserstoffatom, eine gerad- oder verzweigtkettige $C_1-C_{18}$ Alkylgruppe, eine $C_3-C_8$ Cycloalkylgruppe oder eine Phenylmethylgruppe sein kann.

Mit Hilfe des neuen Verfahrens konnten erstmals auch das nicht in der Literatur beschriebene N,N'-Diformylsulfamid und das ebenfalls unbekannte N,N'-Bis(cyclohexylcarbonyl)-sulfamid hergestellt werden.

Durch Wahl eines geeigneten Lösungsmittels, in welchem zwar die Ausgangsmaterialien löslich sind, jedoch das gewünschte Endprodukt unlöslich ist, kommt es zum langsamen Auskristallisieren des letzteren, das bereits in hoher Reinheit anfällt und nicht mehr umkristallisiert zu werden braucht.

Für gewisse Anwendungen hat es sich als vorteilhaft erwiesen, die Reaktion in einem Lösungsmittel durchzuführen, in dem auch das Endprodukt löslich ist. Dies ist z. B. dann der Fall, wenn die N,N'-Diacylsulfamide in Form einer Lösung weiterverarbeitet werden sollen, so daß das Widerauflösen der Präparate entfällt. Gemäß einer speziellen Ausführungsform der Erfindung wird als Lösungsmittel Tetrahydrofuran gewählt, da dieses Lösungsmittel teilweise durch Polymerisation an der Umsetzung beteiligt ist, wobei sich Präparate ergeben, die auch beim Verdünnen mit inerten Lösungsmitteln wie z. B. Benzol nicht aus der Lösung ausgefällt werden, was die erfindungsgemäße Verwendung als Stabilisator in anaeroben Klebstoffen außerordentlich erleichtert.

Die N,N'-Bis(alkoxycarbonyl)-sulfamide und N,N'-Bis(aryloxycarbonyl)-sulfamide können durch Addition der entsprechenden Alkohole bzw. Phenole an Sulfuryldiisocyanat in quantitativer Ausbeute erhalten werden:

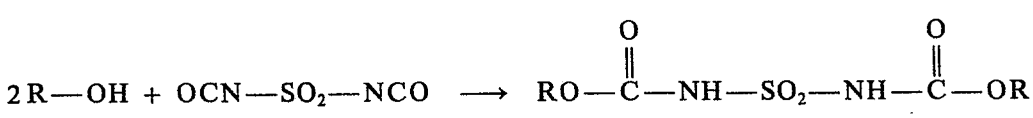

vergl. US-PS 3 326 967; R. Appel, H. Gerber, Chem. Ber. 91, 1200—1203 (1958); N. Onodera, Kogyo Kagaku Zasshi 65, 790—793 (1962); US-PS 3 420 867.

Zur näheren Erläuterung der Erfindung sollen die nachfolgenden Versuche und das Beispiel dienen:

## Versuch 1

### Herstellung von N,N'-Diacetylsulfamid

12 g wasserfreie Essigsäure wurden in 150 ml absolutem Benzol gelöst und unter Rühren wurden bei Raumtemperatur 14,8 g Sulfuryldiisocyanat (hergestellt nach den Angaben der DE-PS 940 351) innerhalb von 20 min zugetropft, wobei die Temperatur von 21 auf 39°C anstieg und eine $CO_2$-Entwicklung

sowie das Ausfallen eines farblosen Niederschlags beobachtet wurden. Das Reaktionsgemisch wurde unter Rühren mittels eines Ölbades auf 60° C erwärmt, bis die Gasentwicklung beendet war, wofür 2 h erforderlich waren. Das Reaktionsgemisch wurde abgekühlt, der Niederschlag wurde abgesaugt und bei 60° C getrocknet. Hierbei wurden 17,8 g farblose Kristalle erhalten (98,8% der Theorie), Fp. 167—169° C unter Zersetzung, welche aus Isopropanol oder Essigsäure umkristallisiert werden können.

Das IR-Spektrum zeigte Banden bei 3220 $cm^{-1}$ (NH-Streckschwingung), 1710 $cm^{-1}$ (C=O-Streckschwingung) und 1490/1170 $cm^{-1}$ (asymm. und symm. $SO_2$-Streckschwingung).

Das $^1$NMR-Spektrum (DMSO-$d^6$) wies folgende Absorptionen auf:

$\delta$ = 1,96 ppm, s, 6H für die zwei $CH_3$-Gruppen,
$\delta$ = 12,10 p, pm, s breit, 2H, austauschbar mit $D_2O$, für die zwei NH-Gruppen.

Elementaranalyse:

| | |
|---|---|
| Berechnet für $C_4H_8N_2O_4S$: | C 26,66%, H 4,48%, N 15,55% |
| Gefunden: | C 26,64%, H 4,35%, N 15,65%. |

Dasselbe Verfahren wurde auch zur Herstellung der folgenden N,N'Diacylsulfamide angewandt:

| R | Ausbeute | Fp |
|---|---|---|
| H | 91% | 147—148° C |
| Ethyl | 96% | 152—153° C |
| n-Propyl | 89% | 148—151° C |
| Cyclohexyl | 88% | 179—182° C |
| Benzyl | 84% | 174—175° C |

Versuch 2

Umsetzung von Sulfuryldiisocyanat
mit Essigsäure in Tetrahydrofuran

36 g wasserfreie Essigsäure wurden in 200 ml abs. Tetrahydrofuran (THF) vorgelegt und 44,4 g Sulfuryldiisocyanat wurden innerhalb von 20 min unter Rühren zugetropft. Dabei stieg die Temperatur bis zum Rückfluß des THF an, parallel dazu wurde eine starke $CO_2$-Entwicklung beobachtet, welche nach 2 h beendet war. Das THF wurde im Vakuum abgedampft und der Rückstand, ein leicht trübes, viskoses gelbes Öl wurde mit abs. Benzol verdünnt. Dabei bildete sich eine kleine Menge gelber Flöckchen, die sich am Boden absetzten. Die klare Benzollösung wurde im Vakuum eingedampft. Dabei blieben 100,1 g eines gelben viskosen Öls zurück, welches auch beim längeren Stehen keine Kristallisation zeigte. Ein solcherart hergestelltes Präparat zeigt alle Eigenschaften von N,N'-Diacetylsulfamid in bezug auf die stabilisierende Wirkung in anaeroben Klebstoffen, besitzt jedoch den Vorteil der ausgezeichneten Löslichkeit in denselben. In derselben Weise wurde das Trifluormethylderivat hergestellt.

Versuch 3

Herstellung von
N,N'-Bis(benzyloxycarbonyl)-sulfamid

10 g wasserfreier Benzylalkohol wurden in 150 ml absolutem Benzol vorgelegt und unter Rühren wurden 7,4 g Sulfuryldiisocyanat zugetropft. Die einsetzende exotherme Reaktion bewirkte einen Temperaturanstieg auf 45° C, bald nach Beginn wurde die Ausfällung eines Niederschlags beobachtet. Nach dem Absinken der Temperatur wurde noch eine Stunde bei Raumtemperatur gerührt. Der entstandene Niederschlag wurde abgesaugt und bei 60° C getrocknet. Ausbeute: 18,06 g farblose Kristalle (99,2% der Theorie), Fp. 139—141° C, welche aus Ethanol umkristallisiert werden können.

IR-Spektrum: 3290/3210 $cm^{-1}$ (NH-Streckschwingung), 1755 $cm^{-1}$ (C = O-Streckschwingung), 1495/1150 $cm^{-1}$ (asymm. und symm. $SO_2$-Streckschwingung) und 1225 $cm^{-1}$ (C—O-Streckschwingung).

$^1$H-NMR-Spektrum (Aceton-$d^6$):
$\delta$ = 5,18 ppm s, 4H für die zwei $-OCH_2$-Gruppen,
$\delta$ = 7,35 ppm s, 10H für die zwei Phenylreste,
$\delta$ = 10,7 ppm s, breit, 2H, austauschbar mit $D_2O$, für die zwei NH-Gruppen.

Elementaranalyse:

Berechnet für $C_{16}H_{16}N_2O_6S$: C 52,74%, H 4,43%, N 7,69%
Gefunden: C 52,40%, H 4,34%, N 7,74%

Dasselbe Verfahren wurde auch zur Herstellung der folgenden Additionsprodukte in quantitativer Ausbeute benutzt:

| R | Fp. (gefunden) |
|---|---|
| $-OCH_3$ | 163—165°C |
| $-OC_2H_5$ | 168—169°C |
| $-OC_3H_7(n)$ | 137°C |
| $-OC_4H_9(n)$ | 78— 79°C |
| $-OC(CH_3)_3$ | 152—153°C |
| $-OC_6H_5$ | 153—154°C |

Das nachfolgende Beispiel zeigt die Wirksamkeit der erfindungsgemäßen Stabilisatoren in einer üblichen anaeroben Klebstofformulierung. Als Maß für die stabilisierende Wirkung wurde die Bestimmung der Gelzeit (gelation time) bei 80°C in min herangezogen. Die Messungen wurden mit einem automatisch registrierenden TECHNE-Gelzeitmeßgerät vorgenommen. Hierbei wurden die stabilisierten anaeroben Klebstofformulierungen in Reagenzgläser der Abmessungen 100 × 12 mm bis zu einer Füllhöhe von 25 mm eingefüllt. Ein abgeplatteter Glasstab von 4 mm Außendurchmesser diente als Meßwertaufnehmer. Die in den Beispielen angegebenen Meßwerte sind die Mittelwerte aus jeweils sechs Messungen.

Um den Einfluß der Stabilisatorzusammensetzungen auf die Härtungseigenschaften der anaeroben Klebstofformulierungen zu überprüfen, wurde zusätzlich die Fingerfestigkeit (finger tight time) an Stahlschrauben nach DIN 933 der Abmessungen M 10 × 20, Qualität 4,6, und den dazugehörigen Muttern gemessen. Unter Fingerfestigkeit wird dabei jene Zeit in min (vom Zeitpunkt des Verschraubens an gerechnet) verstanden, nach der durch den unter leichtem Druck an eine mit Klebstoff bestrichene Mutter angelegten Finger keine Bewegung auf einer ebenfalls mit Klebstoff bestrichenen Schraube mehr möglich ist.

## Beispiel

A. Zur Ermittlung des Einflusses phenolischer Stabilisatoren auf die Stabilität anaerober Klebstoffe wurde folgende Klebstofformulierung hergestellt (Angaben in Gew.-%):

| | |
|---|---|
| Diethylenglykoldimethacrylat | 95 |
| Acrylsäure | 1 |
| Cumolhydroperoxid (80% in Cumol) | 2 |
| N,N-Dimethyl-4-toluidin | 1 |
| Saccharin (Benzosulfimid) | 1 |

Diese Formulierung wurde als Klebstoffbasis auch in allen folgenden Versuchen benutzt, in denen der Einfluß der Stabilisatorzusammensetzungen auf anaerobe Klebstoffe untersucht wurde. Zur Klebstoffbasis wurden verschiedene phenolische Stabilisatoren in unterschiedlichen Konzentrationen hinzugefügt und die Gelzeit bei 80°C sowie die Fingerfestigkeit auf nicht entfetteten Stahlschrauben wurden gemessen. Bei beiden Größen sind jeweils die Mittelwerte aus sechs Messungen angegeben. Die folgende Tabelle zeigt die gefundenen Abhängigkeiten.

Tabelle 1

| Stabilisator | Konzentration Gew.-% | Gelzeit b. 80° C (min) | Fingerfestigkeit (min) |
|---|---|---|---|
| Keiner | — | 5 | 3 |
| Hydrochinon | 0,5 | 8 | 15 |
| | 1,0 | 12 | 120 |
| | 3,0 | 60 | >120 |
| 4-Methoxyphenol | 0,5 | 3 | 6 |
| | 1,0 | 6 | 8 |
| | 3,0 | 8 | 15 |
| 2,5-Di-tert.-butyl-hydrochinon | 0,5 | 11 | 4 |
| | 1,0 | 19 | 5 |
| | 3,0 | 38 | 10 |
| 2,6-Di-tert.-butyl-4-methyl-phenol | 0,5 | 8 | 40 |
| | 1,0 | 12 | 63 |
| | 3,0 | 38 | >120 |

Wie die Werte der Gelzeit und der Fingerfestigkeit zeigen, ist es nur bei 2,5-Di-tert.-butyl-hydrochinon möglich, die Lagerstabilität der Klebstoffe etwa zu verbessern, ohne gleichzeitig eine allzu starke Zunahme der Fingerfestigkeit in Kauf nehmen zu müssen.

Der Einfluß der erfindungsgemäßen Stabilisatorzusammensetzungen bestehend aus einem sterisch gehinderten Phenol (2,5-Di-tert.-butylhydrochinon) und verschiedenen Sulfamidderivaten wurde in gleicher Weise untersucht.

Zu diesem Zweck wurden zu der unter A beschriebenen Klebstofformulierung jeweils 2 Gew.-% 2,5-Di-tert.-butylhydrochinon und 1 Gew.-% des jeweiligen Sulfamidderivats zugesetzt und es wurden wiederum die Gelzeit bei 80° C und die Fingerfestigkeit auf nicht entfetteten Stahlschrauben bestimmt. Die Meßwerte finden sich in der folgenden Tabelle 2.

Tabelle 2

| Sulfamidderivat 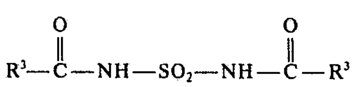 $R^3$ = | Gelzeit (80°C) (min) | Fingerfestigkeit (min) vor Alterung | nach Alterung |
|---|---|---|---|
| Kein Sulfamidderivat | 25 | 7 | – |
| Benzyloxy- | >600 | 4 | 5 |
| Diphenylmethyloxy- | >600 | 4 | 7 |
| Phenyloxy- | >600 | 3 | 6 |
| H | >600 | 3 | 5 |
| Methyl- | >600 | 2 | 4 |
| Benzyl- | >600 | 3 | 5 |
| Trifluormethyl- | >600 | 2 | 3 |

Zusammenfassend kann gesagt werden, daß durch die erfindungsgemäßen Stabilisatorzusammensetzungen die Gelzeit um mehr als das 20fache erhöht wird, was einer entsprechenden Verlängerung der Lagerstabilität gleichkommt. Dabei kommt es nicht wie bei den bislang bekannten Stabilisatoren zu einer Verlängerung der Abbindezeit (ausgedrückt durch die Fingerfestigkeit), sondern es ist im Gegenteil eine relative Verkürzung des Abbindevorganges zu beobachten. Auch nach Durchführung einer 24stündigen beschleunigten Alterung bei 80°C bleibt das ausgezeichnete Abbindevermögen nahezu unverändert erhalten, wie die Meßwerte »Fingerfestigkeit nach Alterung« zeigen.

**Patentansprüche**

1. Anaerob härtende Klebstoffmasse auf Basis von polymerisierbaren Mono-, Di- oder Triacrylaten und/oder -methacrylaten und einem Redoxsystem als Beschleuniger, dadurch gekennzeichnet, daß sie als Stabilisator Sulfamidderivate mit der Gruppierung

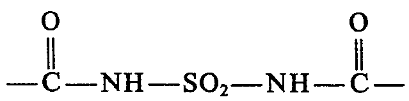

enthält.

2. Klebstoffmasse nach Anspruch 1, dadurch gekennzeichnet, daß sie Sulfamidderivate der allgemeinen Formel

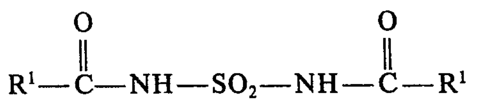

(I)

enthält, in der die Reste $R^1$ gleich oder verschieden sind und jeweils einen gerad- oder verzweigtkettigen Alkylrest mit 1 bis 18 C-Atomen, einen Cycloakylrest mit 3 bis 8 C-Atomen, einen Phenylmethylrest, einen Trifluor- oder Trichlormethylrest oder einen Alkoxyrest $-OR^2$ bedeuten, wobei $R^2$ ein gerad- oder verzweigtkettiger Alkylrest mit 1 bis 18 C-Atomen, ein Cycloalkylrest mit 3 bis 8 C-Atomen, ein Phenylrest, ein Di- oder Triphenylmethylrest, ein Phenylakylrest mit 1 bis 4 C-Atomen in der Alkylgruppe oder ein Alkylphenylrest mit 1 bis 4 C-Atomen in dem/den Alkylrest(en) ist.

3. Klebstoffmasse nach Anspruch 2, dadurch gekennzeichnet, daß sie ein Diacylsulfamid enthält.

4. Klebstoffmasse nach Anspruch 1, dadurch gekennzeichnet, daß sie als Sulfamidderivat das nicht isolierte Umsetzungsprodukt von Sulfuryldiisocyanat mit einer Carbonsäure $R^1COOH$ (wobei $R^1$ die obige Bedeutung hat, aber kein Alkoxyrest ist) in Tetrahydrofuran enthält.

5. Klebstoffmasse nach einem der Ansprüche 1 bis 4, dadurch gekennzeichnet, daß sie eine Mischung aus 1 bis 90 Gew.-% des Sulfamids und 99 bis 10 Gew.-% eines phenolischen Antioxidationsmittels enthält.

6. Klebstoffmasse nach Anspruch 5, dadurch gekennzeichnet, daß sie ein Phenol der allgemeinen Formel

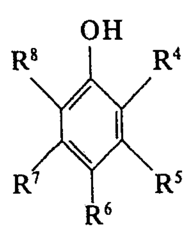

(II)

enthält, in der die Reste $R^4$, $R^5$, $R^7$ und $R^8$ jeweils ein H-Atom oder eine Alkylgruppe mit 1 bis 4 C-Atomen darstellen und der Rest $R^6$ entweder dieselbe Bedeutung hat oder eine Hydroxy- oder Methoxygruppe ist.

7. Klebstoffmasse nach Anspruch 6, dadurch gekennzeichnet, daß sie 2,5-Di-tert.-butylhydrochinon enthält.

8. Klebstoffmasse nach einem der Ansprüche 1 bis 7, dadurch gekennzeichnet, daß das Redoxsystem aus Cumolhydroperoxid und einem tertiären aromatischen Amin oder einem sekundären heterocyclischen Amin mit hydriertem heterocyclischem Ring besteht.

9. Klebstoffmasse nach einem der Ansprüche 1 bis 8, dadurch gekennzeichnet, daß sie ferner ein Sulfimid als Beschleuniger enthält.

10. Klebstoffmasse nach Anspruch 9, dadurch gekennzeichnet, daß sie Benzosulfimid enthält.

## Claims

1. An anaerobically curable adhesive composition based on polymerizable mono-, di- or triacrylates and/or -methacrylates and a redox system as accelerator, characterized in that it comprises sulfamide derivatives containing the group

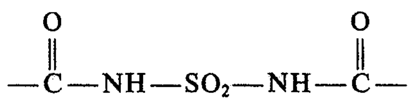

as stabilizer.

2. An adhesive composition according to claim 1, characterized in that it comprises sulfamide derivatives of the general formula

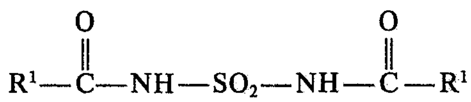

(I)

in which the groups $R^1$ which may be identical or different are each a linear or branched alkyl group with 1 to 18 carbon atoms, a cycloalkyl group with 3 to 8 carbon atoms, a phenylmethyl group, a trifuloro- or trichloromethyl group, or an alkyoxy group $-OR^2$, $R^2$ being a linear or branched alkyl group with 1 to 18 carbon atoms, a cycloalkyl group with 3 to 8 carbon atoms, a phenyl group, a di- or triphenylmethyl group, a phenylakyl group with 1 to 4 carbon atoms in the alkyl group, or an alkylphenyl group with 1 to 4 carbon atoms in the alkyl residue or residues.

3. An adhesive composition according to claim 2, characterized in that it comprises a diacylsulfamide.

4. An adhesive composition according to claim 1, characterized in that it comprises as sulfamide derivative the reaction product of sulfuryl diisocyanate with a carboxylic acid $R^1COOH$ (in which $R^1$ is defined as above but may not be an alkoxy radical) in tetrahydrofuran which reaction product has not been isolated.

5. An adhesive composition according to claim 1, characterized by comprising a combination of 1 to 90% by weight of the sulfamide and 99 to 10% by weight of a phenolic anti-oxidant.

6. An adhesive composition according to claim 5, characterized in that it comprises a phenol of the general formula

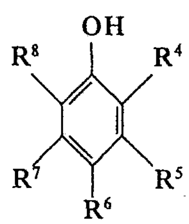

(II)

in which $R^4$, $R^5$, $R^7$ and $R^8$ are each a hydrogen atom or a lower alkyl group with 1 to 4 carbon atoms, and in which the group $R^6$ is a hydrogran atom, a lower alkyl group with 1 to 4 carbon atoms, a hydroxy or a methoxy group.

7. An adhesive composition according to claim 6, characterized by comprising 2,5-di-tert.-butylhydroquinone.

8. An adhesive composition according to one of the claims 1 to 7, characterized in that the redox system consists of cumene hydroperoxide and a tertiary aromatic amine or a secondary heterocyclic amine with hydrogenated heterocyclic ring.

9. An adhesive composition according to one of the claims 1 to 8, characterized by comprising further a sulfimide as accelerator.

10. An adhesive composition according to claim 9, characterized by comprising bezosulfimide.

## Revendications

1. Masse de colle durcissant par anaérobie à base de mono-, di- ou triacrylates et/ou -métacrylates polymérisables et d'un système Redox comme accélérateur, caractérisée en ce qu'elle contient comme stabilisateur, un dérivé de sulfamide de formule:

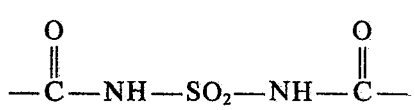

2. Masse de colle selon la revendication 1, caractérisée en ce qu'elle contient des dérivés de sulfamide de formule générale

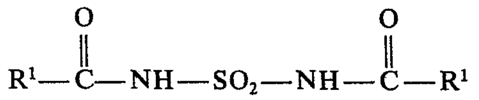

(I)

où les fragments $R^1$ sont identiques ou différents et désignent un fragment alcoyle à chaîne droite ou ramifiée ayant de 1 à 18 atomes de carbone, un fragment cycloalcoyle ayant de 3 à 8 atomes de carbone, un fragment phénylméthyle, un fragment trichloro- ou trifluorométhyle ou bien un fragment alcoxy—$OR^2$ où $R^2$ désigne un fragment alcoyle à chaîne droite ou ramifiée ayant de 1 à 18 atomes de carbone, un fragment cycloalcoyle ayant de 3 à 8 atomes de carbone, un fragment phényle, un fragment di- ou triphénylméthyle, un fragment phénylalcoyle ayant de 1 à 4 atomes de carbone dans le groupe alcoyle ou bien un fragment alkylphényle ayant de 1 à 4 atomes de carbone ou se trouve(nt) le ou les fragments alcoyles.

3. Masse de colle selon la revendication 2, caractérisée en ce qu'elle contient un diacylsulfamide.

4. Masse de colle selon la revendication 1, caractérisée en ce qu'elle contient, comme dérivé de sulfamide, le produit de transformation non isolé de diisocyanate de sulfuryle avec un acide carbonique $R^1COOH$ (où $R^1$ a la signification ci-dessus, mais n'est pas un fragment alcoxy) dans du tetrahydrofurane.

5. Masse de colle selon l'une des revendications 1 à 4, caractérisée en ce qu'elle contient un mélange de 1 à 90% en poids de sulfamide et de 99 à 10% en poids d'un agent antioxydant phénolique.

6. Masse de colle selon la revendication 5, caractérisée en ce qu'elle contient un phénol de formule générale,

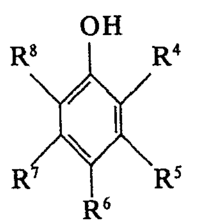

(II)

où les fragments $R^4$, $R^5$, $R^7$ et $R^8$ représentent un atome d'hydrogène ou un groupe alcoyle ayant de 1 à 4 atomes de carbone et le fragment $R^6$ a soit la même signification ou bien est un groupe hydroxy ou méthoxy.

7. Masse de colle selon la revendication 6, caractérisée en ce qu'elle contient de la 2,5-di-tert.-butylhydroquinone.

8. Masse de colle selon l'une des revendications 1 à 7, caractérisée en ce que le système Redox se compose d'un hydroperoxyde de cumène et d'une amine aromatique tertiaire ou bien d'une amine hétérocyclique secondaire avec noyau hétérocyclique hydraté.

9. Masse de colle selon l'une des revendications 1 à 8, caractérisée en ce qu'elle contient de plus un sulfimide comme accélérateur.

10. Masse de colle selon la revendication 9, caractérisée en ce qu'elle contient du benzosulfimide.